# EUROPEAN PATENT APPLICATION

(11) **EP 1 481 820 A1**
(43) Date of publication of application: **01.12.2004**
(21) Application number: 04076204.9
(22) Date of filing: 21.04.2004
(51) Int. Cl.: B60B 33/02

(54) **Castor**

(30) Priority: 30.05.2003 NL 1023573
(71) Applicant: Colson Transportwielen B.V., 3903 LH Veenendaal (NL)
(72) Inventor: Ruitenbeek, Cornelis Hendrik, 3941 LW Doorn (NL)
(74) Representative: Valkonet, Rutger

(57) **Abstract**

The invention relates to a castor comprising a fork (2) that supports a running wheel (1), which fork (2) is connected for rotation about an axis of rotation (A) to a supporting element (11) to be fixed to an object to be supported by the castor, which supporting element (11) is disposed on a side of the fork (2) remote from the running wheel (1). An adjustable locking element (18) is connected to the fork (2) for locking the fork (2) and the running wheel (1) against rotation about said axis of rotation (A). One end of the locking element (18) can be moved into engagement with the supporting element (11) so as to lock the running wheel (1) and the fork (2) against rotation about the axis of rotation (A).

## Description

The invention relates to a castor comprising a fork that supports a running wheel, which fork is connected for rotation about an axis of rotation to a supporting element to be fixed to an object to be supported by the castor, which supporting element is disposed on a side of the fork remote from the running wheel, whilst an adjustable locking element is connected to the fork for locking the fork and the running wheel against rotation about said axis of rotation.

Such a castor is known from European patent application No. 0 624 485. In this known construction, the locking element engages a plate-shaped part disposed within the fork, which is held in position by means of a pin mounted to the supporting element, so as to lock the fork and the running wheel against rotation about the axis of rotation. A drawback of this known construction is the fact that there is a danger that the plate-shaped part will become detached and will pivot with respect to the pin during use, so that it cannot be guaranteed that the running wheel will be adequately locked against rotation about its axis of rotation.

In addition, said known locking construction is liable to fouling by dirt thrown up by the running wheel.

According to the invention, one end of the locking element can be moved into engagement with the supporting element so as to lock the running wheel and the fork against rotation about the axis of rotation.

Since the supporting element is fixed to an object to be supported by the castor during use of the castor, an effective locking of the castor and the fork with respect to the supporting element can be obtained at all times by causing the locking element and the supporting element to engage each other. Furthermore, the risk of the locking mechanism becoming fouled can be significantly reduced when using the construction according to the invention.

A compact and solid construction can be realised when a journal is mounted to the fork, which journal is accommodated, via a bearing surrounding the journal, in a part of the supporting element that surrounds said bearing. By forming the journal and the fork supporting the running wheel of a piece of plate-shaped material, comparatively few parts will suffice for the construction of the castor.

The invention will be explained in more detail hereinafter by means of a possible embodiment of the construction according to the invention as shown in the appended figures.

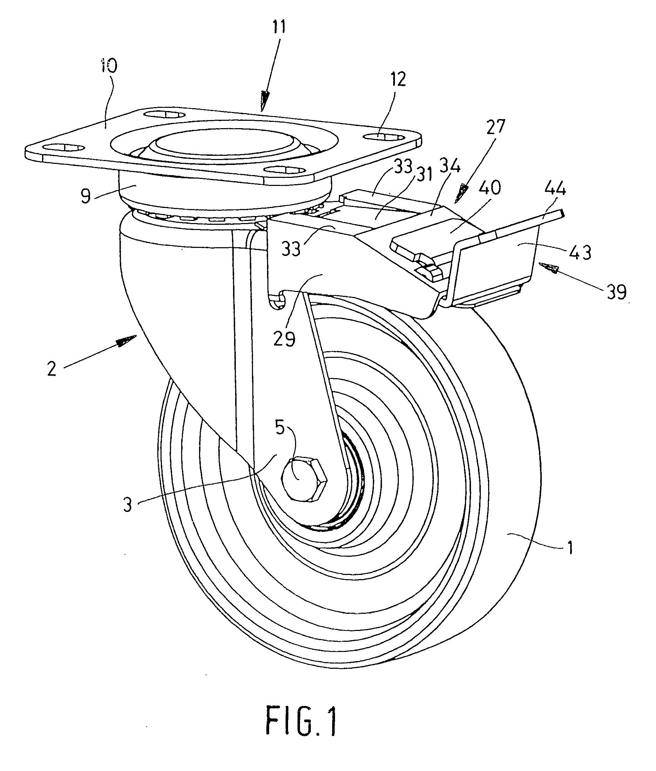

Fig. 1 is a perspective view of a castor according to the invention.

Fig. 2 is a sectional view of the castor that is shown in Fig. 1, from which the running wheel has been left out.

Fig. 3 is a perspective bottom plan view of Fig. 2, from which the forks has been left out.

Fig. 4 is a perspective view of the locking element.

The castor that is shown in the figures comprises a running wheel 1, which is supported by a fork 2. The fork 2, which is made of a piece of plate-shaped material, comprises two cheeks 3, in the free lower ends of which holes 4 are formed for accommodating an axle pin 5, about which the running wheel 1 is freely rotatable. The cheeks 3 are interconnected by an connecting piece 6 formed in one piece therewith, an embossed part of which forms a journal 7. Said journal 7 is surrounded by a rolling bearing 8, via which the fork is rotatably supported in a jacket-like part 9 surrounding the roller bearing which forms a supporting element 11 with a flange 10 joining an upper end thereof. Four holes 12 are formed in the flange 10 of the supporting element 11 for the passage therethrough of bolts or the like, by means of which the supporting element 11 can be fixed to an object to be supported by the castor.

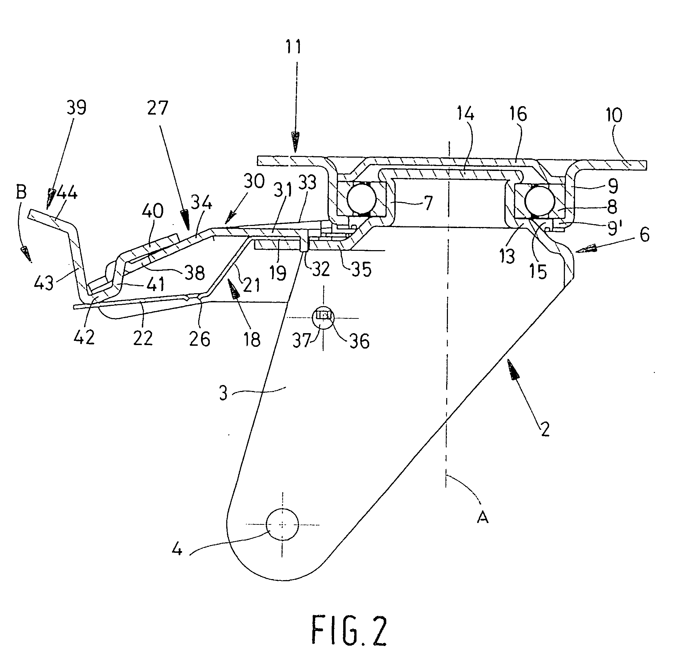

As Fig. 2 shows, the bearing 8 is on the one hand supported on a shoulder 13 that forms part of the connecting piece 6 of the fork 2 with its bottom side, whilst on the other hand it is supported on a flanged lower end 9' of the jacket-like part 9. After the bearing 8 has been slid over the journal 7 and placed on the shoulder 13 upon assembly, the closed upper wall 14 of the journal 7 is flanged over the bearing 8, in such a manner that the bearing 8 is retained between the shoulder 13 and the flanged edge of the upper wall 14 of the journal 7. A seal (not shown) is provided between the fork 2 and the supporting element 11 in the space 15 under the bearing 8 for protecting the bearing 8 against dirt being thrown up and the like. The space in the jacket-like part 9 that accommodates the bearing 8 is furthermore closed by means of a cover 16 pressed into the jacket-like part 9 above the bearing. The bearing 8 thus enables the fork 2 and the running wheel 1 to rotate freely with respect to the supporting element 11 about the axis of rotation A of the castor formed by the central axis of the bearing 8.

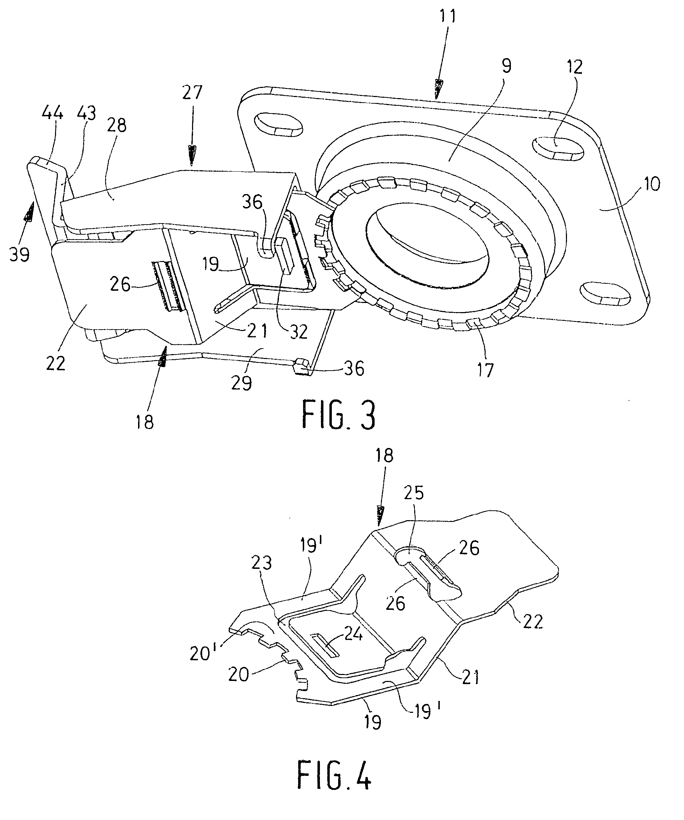

As furthermore appears in particular from Fig. 3, the inwardly flanged lower end 9' of the jacket-like part 9 of the supporting element 11 is provided with teeth 17 formed in one piece therewith in the illustrated embodiment. Said teeth are provided to mate with a locking element 18. The locking element 18 (Fig. 4), which is made of plate-shaped, springing material, comprises a first flat part 19, which is provided with teeth 20 at its free end. A part 21 extending at an angle with respect to the part 20 joins the end of the flat part 19 remote from the teeth, which parts 21 blends into a further part 22 at its end remote from the part 20, which further part 22 joins the part 21 at an angle.

As Fig. 4 furthermore shows, a U-shaped slot 23 is formed in the part 19, with the ends of the parallel legs of the slot extending into the part 21. The connecting piece that interconnects the two legs of the U-shaped slot 23 is positioned close to the end of the part 19 comprising the teeth 20. The part 20' of the part 19 comprising the teeth 20 is thus connected to the other part of the locking element 18 by means of two elongated, narrow arms 19' connected to the ends of said part 20'. A slotted hole 24 is furthermore formed in the part 19, on the side of the slot 23 remote from the teeth. A slotted hole 25 is formed in the part 22 of the locking element 18, near the connection to the part 21, which slotted hole 25 is bounded by two lips 26 bent outwards from the part 22.

The locking element 18 as described above is mounted to the fork 2 by means of a cover 27 of substantially U-shaped section, which is made of plate material. The cover 27 has two side plates 28 and 29, which are interconnected by a connecting piece 30. Said connecting piece 30 comprises a flat part 31, which is provided with a projecting nose 32 at its free end. The connecting piece 30 comprises parts 33, which slope upwards in the direction of the free end of the cover 27, on either side of the plate-shaped part 31 of the cover 27. The connecting piece 30 furthermore comprises a part 34 extending at an obtuse angle from the end of the part 31 and the ends of the parts 33. As is apparent in particular from Fig. 2, the nose 32 extends through a slotted hole 24 formed in the part 19 of the locking element 18 and a slotted hole formed in a part 35 of the connecting piece 6 of the fork that extends perpendicularly to the axis of rotation A of the castor. As will be apparent from Fig. 2, the part of the plate-shaped part 19 of the locking element 18 that is surrounded by the slot 23 is retained between the part 31 of the cover 27 and the part 35 of the fork 2. The two arms 19' are disposed under the parts 33 of the cover 27 that slope upwards in the direction of the axis of rotation A. The cover 27 is mounted to the fork 2 by means of lips 36 formed on the ends of the side plates 28 and 29, which are inserted into holes 37 formed in the cheeks 3 of the fork.

A slotted hole 38 is provided near the free end of the part 34 of the cover 27, which slotted hole accommodates an operating element 39 for the locking element 38, which has been folded from a plate-shaped material. The operating element 39 comprises a first part 40, which is disposed above the part 34 of the cover 27 and which joins a part 41 that extends through the opening 38 in the part 34. The part 41 blends into a further part 42, which is disposed under the free end of the part 34 of the cover 27 and which abuts against the end of the part 22 of the locking element 18 at the location of its transition into an upwardly sloping part 43. The upwardly extending part 43 of the operating element 39 blends into a part 44 that slopes upwards in a direction away from the fork.

When the operating element 39 is pushed down, for example by exerting a force in the direction indicated by the arrow B (Fig. 2) on the part 44 of the operating element with one foot, the part 22 of the locking element 18 will be moved downwards, and the ends of lips 26 forming part of the locking element 18 will be pushed against the outer circumference of the running wheel 1 so as to lock the running wheel 1 against rotation about the axle pin 5. Furthermore, the arms 19' comprising the teeth 20, which are disposed on either side of the part 19 of the locking element 18 that is clamped down between the part 31 of the cover 27 and the part 35 of the fork 2, will be pivoted in upward direction, which is possible because the parts 33 of the cover 27 disposed on either side of the part 31 of the cover 27 slope upwards, thus creating space for the upward movement of the two arms 19', which are provided with teeth 20 at their ends.

When the teeth 20 that form part of the locking element 18 are moved in upward direction, said teeth 20 will come to mesh with the teeth 17 on the supporting element 11, as a result of which the fork 2 and the running wheel 1 are locked against rotation about the axis of rotation A of the castor.

In this locked position, the operating element 39 has pivoted through a so-called dead centre in the direction indicated by the arrow B so far that the part 40 extends upwards, seen in Fig. 2. To unlock the operating element 39, a force may be exerted on said upwardly extending part 40 for the purpose of pivoting said part in anti-clockwise direction, seen in Fig. 2, and returning the operating element 39 to the position that is shown in Fig. 2 again in order for the locking engagement to be released.

It will be apparent that by using the construction according to the invention, a castor construction is obtained which is built up of comparatively few parts, which can be assembled in a simple manner and in which the teeth 17 and 20 that will mesh with each other are adequately protected against dirt being thrown up and the like.

## Claims

1. A castor comprising a fork that supports a running wheel, which fork is connected for rotation about an axis of rotation to a supporting element to be fixed to an object to be supported by the castor, which supporting element is disposed on a side of the fork remote from the running wheel, whilst an adjustable locking element is connected to the fork for locking the fork and the running wheel against rotation about said axis of rotation, **characterized in that** one end of the locking element can be moved into engagement with the supporting element so as to lock the running wheel and the fork against rotation about the axis of rotation.

2. A castor according to claim 1, **characterized in that** the locking element comprises a part which is fixed to a connecting piece inter-connecting cheeks of the fork, on a side of said connecting piece remote from the running wheel, and **in that** the connecting element furthermore comprises a part which is capable of upward movement with respect to said fixed part, which part is provided with teeth that can be moved into engagement with teeth present on the supporting element.

3. A castor according to claim 2, **characterized in that** the locking element is made of a plate-shaped, springing material, and **in that** a further part of the locking element joins the part of the locking element that is fixed to the connecting piece of the fork, which further part is connected to the teeth of the locking element with an arm forming part of the locking element, which extends beside said fixed part.

4. A castor according to claim 3, **characterized in that** an arm connected to said teeth is provided on either side of the fixed part of the locking element.

5. A castor according to any one of the preceding claims 2 - 4, **characterized in that** the locking element, which is made of a plate-shaped , springing material, is disposed under a cover of substantially U-shaped section, which is mounted to the fork of the running wheel, with the part of the locking element that is fixed to the fork being clamped down between the cover and the connecting piece of the fork.

6. A castor according to claim 3, **characterized in that** the cover is provided with a projecting nose, which extends through an opening extending in the clamped-down part of the locking element and an opening formed in the connecting piece of the fork.

7. A castor according to claim 5 or 6, **characterized in that** the cover comprises side plates extending on either side of the fork, with bent lips of said side plates being hooked in openings formed in cheeks of the fork.

8. A castor according to any one of the preceding claims 5 - 7, **characterized in that** the cover comprises an operating element being pivotally connected to the cover, which operating element engages a free end of the locking element, in such a manner that the free end of the locking element can be pivoted with respect to the fixed part of the locking element by rotating the operating element.

9. A castor according to any one of the preceding claims, **characterized in that** the locking element is provided with projections, which engage the outer circumference of the running wheel upon pivoting of the locking element for the purpose of locking the fork and the running wheel against rotation about the axis of rotation.

10. A castor according to any one of the preceding claims, **characterized in that** a journal is attached to the fork, which journal is accommodated , via a bearing surrounding said journal, in a part of the supporting element that surrounds said bearing.

11. A castor according to claim 10, **characterized in that** the journal with the fork supporting the running wheel is made of a piece of a plate-shaped material.

12. A castor according to either one of the preceding claims 10 or 11, **characterized in that** teeth mating with the locking element are provided at the bottom side of the part of the supporting element that surrounds the bearing.
